# EUROPEAN PATENT APPLICATION

(11) **EP 2 043 229 A2**
(43) Date of publication of application: **01.04.2009**
(21) Application number: 09000608.1
(22) Date of filing: 15.08.2003
(51) Int. Cl.: H02K 1/14, H02K 3/52, H02K 11/04, H02K 21/24

(54) **Axial gap type motor generator**

(30) Priority: 16.08.2002 JP 2002237334
(62) Divisional of application: 03788132.3
(71) Applicant: Yamaha Hatsudoki Kabushiki Kaisha, Iwata-shi, Shizuoka-ken 438-8501 (JP)
(72) Inventor: Naito, Shinya, Iwata-shi Shizuoka-ken 438-8501 (JP); Hino, Haruyoshi, Iwata-shi Shizuoka-ken 438-8501 (JP); Ishihara, Hiroyuki, Iwata-shi Shizuoka-ken 438-8501 (JP); Murota, Keiko, Iwata-shi Shizuoka-ken 438-8501 (JP); Terada, Junji, Iwata-shi Shizuoka-ken 438-8501 (JP); Ono, Tomohiro, Iwata-shi Shizuoka-ken 438-8501 (JP)
(74) Representative: Grünecker, Kinkeldey, Stockmair & Schwanhäusser Anwaltssozietät

(57) **Abstract**

The invention relates to an axial gap dynamo-electric machine comprising a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth, the partially removed circle having a midpoint at a predetermined point in relation to a center axis of the bearing and opposing the magnet at a predetermined gap.

The invention aims to provide an improved axial gap dynamo-electric machine having a structure in which some of the teeth in the stator are missing, to limit inclination of a rotor caused by such missing of the teeth.

Therefore, the invention provides that circumferential pitches among the plurality of teeth are set to differ from each other, in particular, so that an attractive force of the magnet is set to increase towards the removed portion.

## Description

The invention relates to an axial gap dynamo-electric machine comprising a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth, the partially removed circle having a midpoint at a predetermined point in relation to a center axis of the bearing and opposing the magnet at a predetermined gap. Further, the invention relate to an apparatus, in particular, a driving machine, such as a motorcycle.

As a dynamo-electric machine used for a drive source in a motorcycle or for other general electric motors, an axial gap dynamo-electric machine as well as a radial gap dynamo-electric machine in the related art attracts the public eye.

For example, in an axial gap electric motor as such axial gap dynamo-electric machine, a yoke of the rotor having a revolving shaft supported by the bearing thereof (rotor yoke) opposes a yoke of a stator (stator yoke), and the opposing surfaces thereof are orthogonal to the revolving shaft. On the opposing surface of the rotor yoke, a magnet for magnetic field is disposed, for example, in a circular shape (or in a ring shape), and on the opposing surface on the stator side, there are disposed a plurality of teeth along the radial direction (in the directions of radii) with respect to the revolving shaft. The opposing surfaces of the magnet and the teeth are orthogonal to the revolving shaft, and a gap between the opposing surfaces is formed into a plane perpendicular to the revolving shaft.

In other words, in a axial gap motor, a magnetic circuit is formed between the rotor and the stator, and the rotor is rotated using an attractive force and a repulsion force of the rotor side magnet with respect to the respective teeth by sequentially switching excitation of the respective teeth corresponding to the N-pole and the S-pole of the rotor-side magnet via coils wound around the respective teeth of the stator.

With such axial gap motor, since the opposing surfaces of the magnet and the teeth are perpendicular to the revolving shaft, the length in the direction along the revolving shaft can be shortened in comparison with a radial gap dynamo-electric machine, that is, a dynamo-electric machine in which the opposing surfaces of the magnet and the teeth are parallel with the revolving shaft, which contributes to decrease in thickness of the dynamo-electric machine.

In recent years, further downsizing is strongly required for an apparatus or a system having the above-described axial gap dynamo-electric machine mounted thereon.

Therefore, in order to satisfy the above-described requirement for downsizing, downsizing of the apparatus or the system having the axial gap dynamo-electric machine mounted thereon is realized by removing some of teeth (in case of an inverter driven by three-phase alternating current, three teeth corresponding to the three phases) disposed adjacently to each other from the plurality of teeth disposed in the radial direction in the axial gap dynamo-electric machine, and using the space that has been used for the removed teeth as a space for arranging a controller/driver for driving the motor (e.g., an inverter), a space for arranging position detecting sensors (e.g., Hall element) for detecting magnetic poles (N-pole, S-pole) of the rotor-side magnet, or a space for coil connection or inverter terminal formation.

However, in the axial gap dynamo-electric machine having the above-described construction in which some of the plurality of teeth disposed in the radial direction with respect to the revolving shaft are removed, the attractive force of the magnet (a force that the magnet attracts the stator) becomes unbalanced (uneven) between the portion of the stator in which the teeth is removed (missing) and the teeth portion of the stator.

Due to the unbalanced state of the attractive force and the internal gap between the revolving shaft of the rotor and the bearing, the rotor is inclined in such a manner that the gap with respect to the side of the teeth-missing portion of the stator is large and the gap with respect to the opposite side of the revolving shaft is small.

Such inclination of the rotor increases noise/vibrations generated by the rotational movement of the dynamo-electric machine, and also increases loss at the gear portion connected to the bearing or the revolving shaft of the rotor, whereby practicability of the axial gap dynamo-electric machine (for example, mountability to electric vehicles/elecbic motorcycles) may be impaired.

In view of such cirumstances, it is an object of the present invention to provide an improved axial gap dynamo-electric machine having a structure in which some of the teeth in the stator is missing, to limit inclination of a rotor caused by such missing of the teeth.

It is further an object of the invention to provide an improved apparatus which is more economically operable.
These objects are solved by the features of the independent claims.

For an electric machine of the above kind, this object is, in particular according to a general inventive concept, solved in that an axial and/or radial width of the gap defined between the magnet and areas of the respectively magnet opposed surfaces of the teeth is varied along the circumference of the partially removed circle.

Preferably, for an electric machine of the above kind, according to a first preferred embodiment of the invention, the above object is solved in an inventive manner by providing a first plane including first and second points on magnet-opposed surfaces of first and second teeth of the plurality of teeth situated on both sides of the removed portion and a third point on a magnet-opposed surface of a third tooth positioned on an opposite side of the center axis of the bearing relative to a center point between the first and the second teeth and being closest to a second plane including the center point and the center axis is inclined about a direction perpendicular to the center axis of the bearing.

Further, preferably the opposed surface of the stator yoke is inclined to position the magnet-opposed surfaces of the first and the second teeth closer towards the magnet than the magnet-opposed surface of the third tooth.

Furthermore, preferably heights of the plurality of teeth are formed so as to increase from the tooth furthest away from the removed position, in particular the third tooth, towards the teeth closest to the removed portion, in particular towards the first and second teeth step-by-step.

Still further, preferably the midpoint of the partially removed circle is positioned on the center axis of the revolving shaft.

Also preferably, for an electric machine of the above kind, the above object is additionally or alternatively solved in an inventive manner by providing circumferential pitches among the plurality of teeth set to differ from each other, in particular, so that an attractive force of the magnet is set to increase towards the removed portion.

Preferably, circumferential pitches among the plurality of teeth are set to increase from a third tooth being positioned further away from the removed portion, in particular, on the opposite side of the center axis relative to the midpoint between a first and a second tooth being located on both sides of and closest to the removed portion, in particular, at a position closest to a second plane including the midpoint and the center axis toward the first and the second teeth in sequence.

Also preferably, for an electric machine of the above kind, the above object is additionally or alternatively solved in an inventive manner by providing areas of the magnet-opposed surfaces of the plurality of teeth set to differ from each other, in particular, so that an attractive force of the magnet is set to increase towards the removed portion.

Further, preferably areas of the magnet-opposed surfaces of the plurality of teeth are set to increase from a third tooth positioned further away from the removed portion, in particular, on the opposite side of the center axis of the bearing relative to a midpoint between first and second teeth positioned closest to and on both sides of the removed portion, in particular, at a position closest to a second plane including the midpoint and the center axis toward the first and second teeth in sequence.

Furthermore, preferably widths of the magnet-opposed surfaces of the plurality of teeth are set to increase from the third tooth to the first and the second teeth in sequence.

Also preferably, for an electric machine of the above kind, the above object is additionally or alternatively solved in an inventive manner by providing a center of the revolving shaft deviated from the midpoint of the partly removed circle in a direction away from the removed portion.

Further, preferably the magnet is formed in a ring shape coaxial with the center of the revolving shaft of the rotor.

Furthermore, preferably a first length along a radial direction between respective surfaces on inner peripheral sides of the respective teeth and the center of the partly removed circle and a length of the inner radius of the ring-shaped magnet are substantially aligned, and a second length along the radial direction between outer peripheral surfaces of the respective teeth and the center of the partly removed circle and a length of the outer radius of the ring-shaped magnet are substantially aligned.

Still further, preferably a length of the inner radius of the ring-shaped magnet is shorter than a first length along a radial direction between inner peripheral surfaces of the respective teeth and the center of the partly removed circle, and/or a length of an outer radius of the ring-shaped magnet is longer than a second length along the radial direction between outer peripheral surfaces of the respective teeth and the center of the partly removed circle.

Also, preferably a first length along a radial direction between respective surfaces on inner peripheral sides of the respective teeth and the center of the partly removed circle and a length of an inner radius of the ring-shaped magnet are substantially aligned, and a length of the outer radius of the ring-shaped magnet is longer than a second length along the radial direction between outer peripheral surfaces of the respective teeth and the center of the partly removed circle.

Also preferably, for an electric machine of the above kind, the above object is additionally or alternatively solved in an inventive manner by providing a connecting yoke for connecting or bridging the removed portion of the stator yoke.

Further, preferably the plurality of teeth are disposed on the opposed surface of the stator yoke, and are constructed as a stator by the stator yoke and the plurality of teeth, wherein the stator further comprises a plurality of flanges for mounting the stator, in particular, wherein the plurality of flanges include two flanges positioned on an upper side of the removed portion in a state in which the stator is mounted, in particular, wherein the two flanges positioned on the upper side are arranged so as to be substantially symmetrical with respect to a line passing an uppermost point and a lowermost point of the stator in the mounted state.

Furthermore, preferably a controller and/or an inverter are provided to be at least partially positioned in the removed portion.

Still further, preferably a planet gear speed reducer is connected to the rotor, in particular, in a manner to at least partially overlap with the gap between rotor and stator in axial direction.

Besides, for an apparatus of the above kind, the above object is solved in an inventive manner by comprising an axial gap dynamo-electric machine according to at least one of the claims 1 to 19.

Further preferred embodiments of the invention are subject to the respective subclaims.

As described above, with the axial gap dynamo-electric machine according to an embodiment of the invention, a plane including first and second points on the magnet-opposed surfaces of first and second teeth out of the plurality of teeth on both sides of the removed portion and a third point on the magnet opposed surface of the third tooth located on the opposite side of the center axis of the bearing relative to the center point between the first and the second teeth and positioned closest to the plane including the center point and the center axis inclines from the direction perpendicular to the center axis of the bearing in the direction in which the magnet-opposed surfaces of the first and the second teeth approach the magnet.

Therefore, the gap between the removed side and the magnet may be determined to be smaller than the gap between the opposite side of the center axis relative to the removed side and the magnet, and thus the unbalanced state (disequilibrium) between the attractive force of the attracting magnet with respect to the removed side and the attractive force of the magnet with respect to the opposite side of the center axis relative to the removed side may be alleviated.

As a consequence, inclination of the rotor toward the opposite side of the center axis relative to the removed side caused by such unbalanced attractive forces may be restrained, and thus vibrations/noise or loss due to such inclination may be reduced.

with the axial gap dynamo-electric machine according to another embodiment of the invention, since the circumferential pitches among the plurality of teeth are uneven in order to increase the attractive force of the magnet with respect to the removed portion, the unbalanced state (disequilibrium) between the attractive force of the attracting magnet with respect to the removed portions and the attractive force of the magnet with respect to the opposite side of the center axis relative to the removed sides may be alleviated.

As a consequence, inclination of the rotor toward the opposite side of the center axis relative to the removed side due to such unbalanced attractive force may be restrained, and thus vibrations/noise or loss due to such inclination may be reduced.

In addition, with the axial gap dynamo-electric machine according to another embodiment of the invention, since the areas of the plurality of teeth opposing the magnet are uneven so that the attractive force of the magnet with respect to the removed portion increases, the unbalanced state (disequilibrium) between the attractive force of the attracting magnet with respect to the removed side and the attractive force of the magnet with respect to the opposite side of the center axis relative to the removed side may be alleviated.

As a consequence, inclination of the rotor toward the opposite side of the center axis relative to the removed portion caused by unbalance of the attractive force may be restrained, and thus vibrations/noise or loss based on such inclination may be reduced.

with the axial gap dynamo-electric machine according to another embodiment of the invention, the center of the revolving shaft of the rotor is deviated from the midpoint of the partly removed circle of the plurality of teeth in the direction away from the removed portion.

In this arrangement, since the length of the center of the revolving shaft of the rotor with respect to the teeth on the removed side may be determined to be longer than the length to the teeth on the opposite side of the center axis relative to the removed portion, lack of magnetic force caused by missing of the teeth on the removed portion may be compensated by the above-described increase in distance with respect to teeth on the removed portion.

As a consequence, moment generated on the side of the removed portion from the center of the revolving shaft of the rotor and moment on the opposite side of the center of the revolving shaft relative to the removed portion may be balanced, and thus inclination of the rotor toward the opposite side of the center of the revolving shaft relative to the removed portion may be restrained and vibrations/noise or loss may be reduced.

In addition, with the axial gap dynamo-electric machine according to the fifth embodiment of the present invention, since the removed portion of the stator yoke is connected by the connecting yoke, the portion between two teeth in the vicinity of the removed portion may be maintained as a magnetic circuit.

Therefore, reduction of magnetic flux and torque caused by the removed portion may be restrained.

In the following, the invention will be described in greater detail by means of preferred embodiments thereof with reference to the attached drawings, wherein:
- Fig. 1: is a side view of an electric motorcycle as an example of an apparatus on which an axial gap dynamo-electric machine according to a first embodiment of the present invention is mounted;
- Fig. 2: is a cross-sectional view (partly in side view) taken along the line II-II in Fig. 1 for explaining the inside of the rear end section of the rear arm shown in Fig. 1;
- Fig. 3: is a drawing of a stator in use mounted at the rear end section of the rear arm as part of an electric motor of the motorcycle shown in Fig. 1 and Fig. 2, when viewed from the rear wheel side;
- Fig. 4: is a perspective view showing a general construction of the principal portion of the stator shown in Fig. 3;
- Fig. 5: is a drawing showing a state in which a plane surface including first and second points on the magnet-opposed surfaces of the first and second teeth and a third point on the magnet-opposed surface of the third tooth (See Fig. 4) is inclined with respect to the direction perpendicular to the center axis of the bearing in a simplified manner;
- Fig. 6: is a comparative drawing comparing a loss obtained when an electric motor having a construction in which the first and the second point on the magnet-opposed surfaces of the first and the second teeth and the third point on the magnet-opposed surface of the third tooth reside in the identical plane surface is employed, and a loss obtained when an electric motor having a construction according to the first embodiment of the present invention;
- Fig. 7: is a perspective view showing a general construction of a stator of the electric motor according to a second embodiment of the present invention;
- Fig. 8: is a plan view showing a general construction of the stator of the electric motor according to a third embodiment of the present invention when viewed from the rear wheel side;
- Fig. 9: is a plan view showing a general construction of the stator of the electric motor according to a fourth embodiment of the present invention when viewed from the rear wheel side;
- Fig. 10: is a plan view showing a general construction of the stator of the electric motor according to a fifth embodiment of the present invention when viewed from the rear wheel side;
- Fig. 11: is a schematic drawing showing the relation between a magnet of the electric motor and teeth of the stator shown in Fig. 10;
- Fig. 12: is a plan view of a general construction of the stator of the electric motor according to a sixth embodiment of the present invention when viewed from the rear wheel side;
- Fig. 13: is a schematic drawing showing a relation between the magnet of the electric motor and the teeth of the stator shown in Fig. 12;
- Fig. 14: is a plan view showing a general construction of the stator of the electric motor according to a seventh embodiment of the present invention when viewed from the rear wheel side;

- Fig. 15: is a schematic drawing showing a relation between the magnet of the electric motor and the teeth of the stator shown in Fig. 14; and
- Fig. 16: is a perspective view showing a general construction of the stator according to a modification of the present invention.

Referring now to attached drawings, preferred embodiments of an axial gap dynamo-electric machine according to the present invention will be described.

### First Embodiment

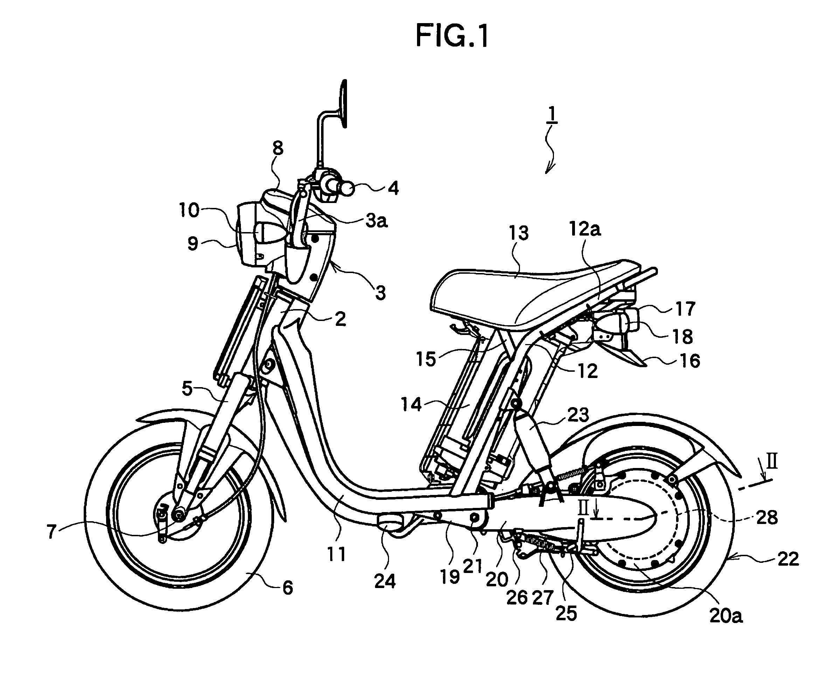

Fig. 1 is a side view of an electric motorcycle 1 as an example of an apparatus on which an axial gap dynamo-electric machine according to a first embodiment of the present invention is mounted.

As shown in Fig. 1, the electric motorcycle 1 includes a head pipe 2 at the upper front of a vehicle body, and the head pipe rotatably accommodates a steering shaft, not shown, for changing the direction of the vehicle body therein. A handle supporting member 3 on which a handle 3a is fixed is mounted at the upper end of the steering shaft, and grips 4 are mounted to both ends of the handle 3a. The right (far side of Fig. 1) grip 4, not shown, constitutes a rotatable throttle grip.

A pair of left and right front forks 5 are mounted to the head pipe 2 downward from the lower end thereof. At the respective lower ends of the front forks 5, a front wheel 6 is mounted via a front axle 7, and the front wheel 6 is rotatably supported by the front axle 7 in a state of being suspended by the front forks 5 in a damping manner. A meter 8 is disposed on the handle supporting member 3 in front of the handle 3a, and a head lamp 9 is fixed to the handle supporting member 3 below the meter 8. Flasher lamps 10 (only one of them is shown in Fig. 1) are disposed on both sides of the headlamp 9.

A pair of left and right vehicle body frames 11 each formed into a substantially L-shape in side view extend from the head pipe 2 rearwardly of the vehicle body. The vehicle body frames 11 are round pipes, and extend from the head pipe 2 rearward and obliquely downward from the head pipe 2, and then horizontally toward the rear so as to be formed substantially into the L-shape in side view.

In the rear end sections of the pair of vehicle body frames 11, a pair of left and right seat rails 12 extend rearward and obliquely upward from the rear end section, and then the rear end sections 12a of the seat rails 12 are bent rearward along the shape of a seat 13.

Between the pair of left and right seat rails 12, there is provided a battery 14 so as to be detachable, and the battery 14 accommodates a plurality of secondary chargeable batteries.

In the vicinity of the bent portions of the pair of left and right seat rails 12, a seat stay 15 formed into an inverted U-shape is welded so as to be inclined upward toward the front with respect to the vehicle body, and the seat 13 is disposed at the portion surrounded by the seat stay 15 and the left and the right seat rails 12 so as to be openable and closable, that is, so as to be capable of pivoting in the vertical direction about the front end of the seat 13.

A rear fender 16 is mounted to the rear ends of the seat rails 12, and a tail lamp 17 is mounted to the rear surface of the rear fender 16. In addition, flash lamps (only one of them is shown in Fig. 1) 18 are mounted on the left and the right of the tail lamp 17.

On the other hand, rear arm brackets 19 (only one of them is shown in Fig. 1) are welded to the horizontal portions of the pair of left and right vehicle body frames 11 below the seat 13, respectively, and the front ends of rear arms 20 are pivotably supported by the pair of left and right rear arm brackets 19 via a pivot shaft 21. A rear wheel 22, which is a driving wheel, is rotatably supported by rear end section 20a of the rear arm 20, and the rear arm 20 and the rear wheel 22 are suspended by a rear cushion 23 in a damping manner.

A pair of left and right footsteps 24 (only one of them is shown in Fig. 1) are disposed below the horizontal portions of the left and the right vehicle body frames 11, respectively, and a side stand 25 is supported by the left rear arm 20 so as to be capable of rotating via a shaft 26 behind the footstep 24. The side stand 25 is urged toward the closing side by a return spring 27.

A drive unit 29 including an axial gap electric motor 28 (hereinafter, may be referred simply as electric motor 28) connected to the rear wheel 22 for rotating the rear wheel 22 is mounted in the rear end section 20a of the rear arm 20.

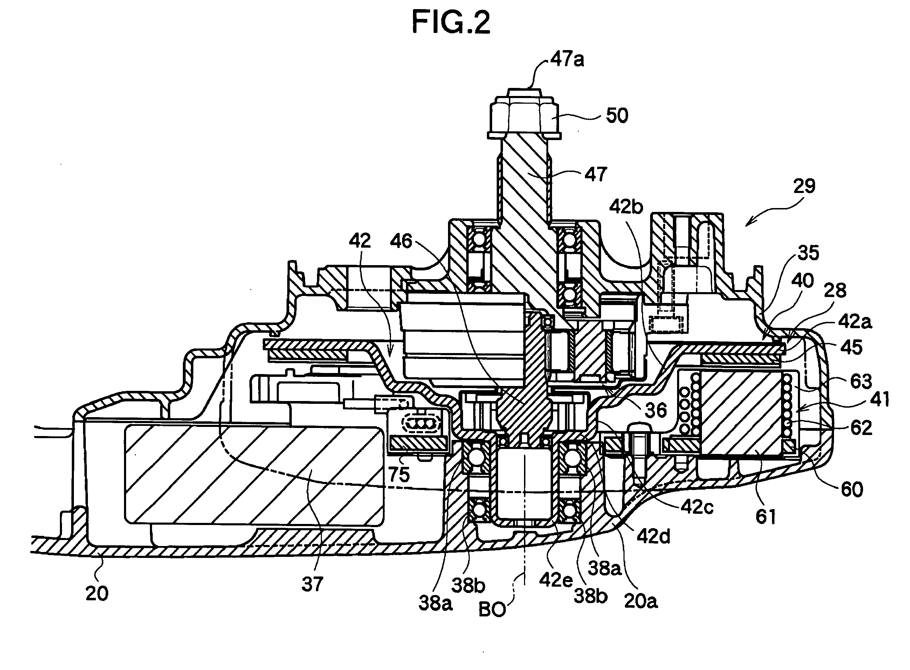

Fig. 2 is a cross-sectional view (partly in side view) taken along the line II-II in Fig. 1 for explaining the inside of the rear end section 20a of the rear arm 20. The rear wheel 22 is not shown.

As shown in Fig. 2, a gear cover 35 covers the right side surface of the rear end 20a of the rear arm 20, and the electric motor 28 that constitutes the drive unit 29, a planet gear speed reducer 36, a controller 37, and so on are integrally assembled within a space formed therein.

The axial gap electric motor 28 includes, as shown in Fig. 2, a rotor 40 supported at the rear end section 20a of the rear arm 20 via bearings 38a, 38b so as to be rotatable about a center axis BO of the bearings 38a, 38b, and a stator 41 of substantially ring (doughnut) shape fixed to the inner surface of the rear end section 20a of the rear arm so as to oppose the rotor 40.

The rotor 40 includes, as shown in Fig. 2, a rotor yoke 42, and the rotor yoke 42 is shaped like a spinning top projecting toward the rear end section 20a of the rear arm 20.

In other words, the rotor yoke 42 includes a ring-shaped portion 42a of a ring shape opposing the stator 41, a tapered portion 42b extending in a substantially tapered shape (substantially conical shape) from the inner peripheral edge of the ring-shaped portion 42a toward the rear end section 20a of the rear arm 20, a first cylindrical portion 42c extending from the side peripheral edge of the rear end section 20a of the rear arm of the tapered portion 42b toward the rear end section 20a along the center axis BO in the projecting manner, a ring-shaped portion 42d extending radially inwardly from the side peripheral edge of the cylindrical portion 42c on the side of the rear end section 20a of the rear arm, and a second cylindrical portion 42e extending from the inner peripheral edge of the ring-shaped portion 42d toward the rear end section 20a along the center axis BO in a projecting manner.

The second cylindrical portion 42e is rotatably supported via the bearings 38a, 38b about the center axis BO, to construct a revolving shaft of the rotor 40. Therefore, the center of rotational axis of a revolving shaft 42e of the rotor 40 corresponds to the center axis BO of the bearings 38a, 38b.

The rotor 40 is fixed to the ring-shaped portion 42a of the rotor yoke 42 on the surface opposing the stator, and is provided with a magnet 45 for magnetic field, being formed into a ring shape which is coaxial with the center axis BO.

The magnet 45 includes N-poles and S-poles disposed alternately along the circumference thereof.

A revolving shaft 46 is connected to the revolving shaft 42e of the rotor 40 at the end on the rear wheel side coaxially with the rotor 40 (revolving shaft 42e), and the revolving shaft 46 is rotatable integrally with the rotor 40.

On the other hand, the planet gear speed reducer 36 is connected to the revolving shaft 46, and is assembled in the tapered portion 42b of the rotor yoke 42. The planet gear speed reducer 36 and the electric motor 28 are pardy overlapped with each other in the direction of the width of the vehicle.

The planet gear speed reducer 36 is connected to a rear axle 47 disposed coaxially with the revolving shaft 46, and has a function to reduce the speed of rotation (rotation of the revolving shaft 46) of the electric motor 28 and to transmit it to the rear axle 47. A nut 50 is detachably screwed on the extremity 47a of the rear axle 47 projecting from the gear cover 35, and the rear wheel 22 is mounted and fixed to the rear axle 47 by screwing the nut 50 thereon.

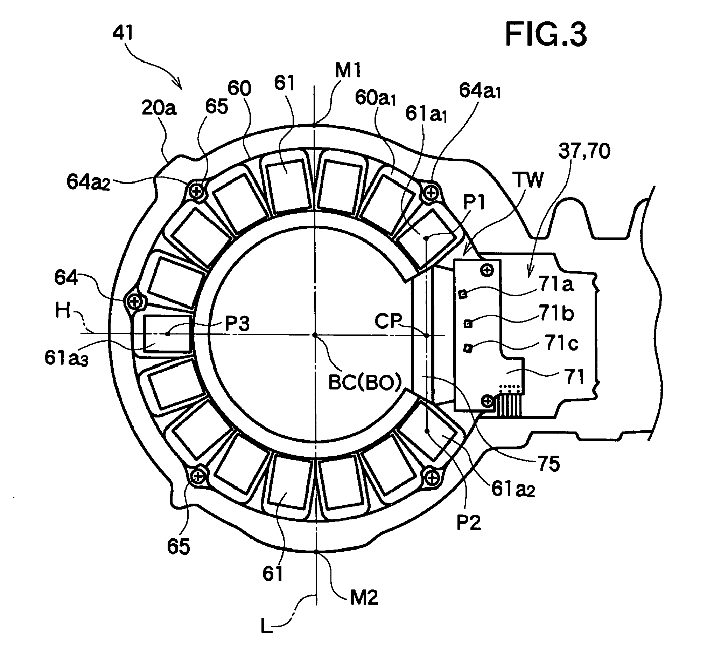

Fig. 3 is a drawing of the stator 41 in use mounted at the rear end section 20a of the rear arm 20 as part of the electric motor 28 of the motorcycle 1 shown in Fig. 1 and Fig. 2, when viewed from the rear wheel side.

As shown in Fig. 2 and Fig. 3, the stator 41 is fixed to the rear end section 20a of the rear arm 20, and includes a layered stator yoke 60 formed by laminating steel plates each being formed substantially into the shape of a partly removed circle (ring) (substantially C-shape) having a midpoint thereof on the center axis BO of the bearings 38a, 38b along the center axis and a plurality of teeth 61 facing the magnet 45 at a predetermined gap and each being formed of laminated steel plates.

The plurality of teeth 61 are disposed on the surface of the stator yoke 60 so as to oppose the magnet 45 in substantially a partly removed circular shape (substantially C-shape) having a midpoint thereof at the point BC on the center axis BO (midpoint) of the bearings 38a, 38b.

The "partly removed circle (ring)" in the present embodiment represents a substantially complete round shape or a substantially oval shape part of which is removed.

In other words, the plurality of teeth 61 disposed substantially into the shape of a partly removed circle (substantially C-shape) in the present embodiment are disposed on the stator yoke 60 circumferentially at regular intervals (circumferential pitches), and three teeth corresponding to the three phases (U-phase, V-phase, and W-phase) are missing in comparison with the case in which the plurality of teeth 61 are disposed in the shape of a complete circle. The plurality of teeth 61 each have a substantially square shaped upper face as shown in Fig. 3 when viewed from the rear wheel side, and are fixedly inserted to the stator yoke 60 so that the upper faces thereof are aligned at the same level from the stator yoke 60.

The circumferential pitch represents an angle formed between line segments connecting the centers of the magnet-opposed surface of the adjacent teeth 61 and the midpoint BC on the center axis BO of the bearings 38a, 38b along the opposed surface from each the centers.

The stator 41 includes a coil 62 (See Fig. 2) wound around each tooth 61, the yoke 60, molded portion 63 formed by integrally molding the teeth 61 and the coils 62, and a plurality of flanges 64 formed on the outer peripheral surface of the molded portion 63 for mounting the molded portion 63 including the teeth 61 and the coils 62 to the rear end section 20a of the rear arm 20. The flange 64 is fixed to the rear end section 20a of the rear arm by screwing a bolt 65.

The controller 37 and an inverter 70 connected to the controller 37 and electrically connected to the respective coils 62 for switching and allowing a current to flow through the coils 62 (U-phase coil, V-phase coil, and W-phase coil) under control of the controller 37 are disposed on the stator yoke 60 and a portion on which the teeth 61 are missing (removed portion) TW. Reference numeral 71 designates an encoder substrate for detecting the rotational position of the rotor 40, and reference numerals 71a, 71b, 71c designate holes IC corresponding to the respective phases.

In the present embodiment, as shown in Fig. 3 to Fig. 5, a plane including first and second points P1, P2 on the magnet-opposed surfaces first and second teeth 61a1 and 61a2 on both sides of the removed portion TW out of the plurality of teeth 61, a center point CP between the first and the second teeth 61a1 and 61a2 (between the first and the second points P1 and P2), and a third point P3 on the magnet-opposed surface a third tooth 61a3 which is positioned on the opposite side of the center axis BO of the bearings 38a, 38b relative to the center point CP and being closest to a plane H including the center point CP and the center axis BO is inclined from a direction X that is perpendicular to the center axis BO of the bearings 38a, 38b in such a manner that the first and the second points P1 and P2 is positioned at a level, for example, about 0.2 mm higher than the third point P3.

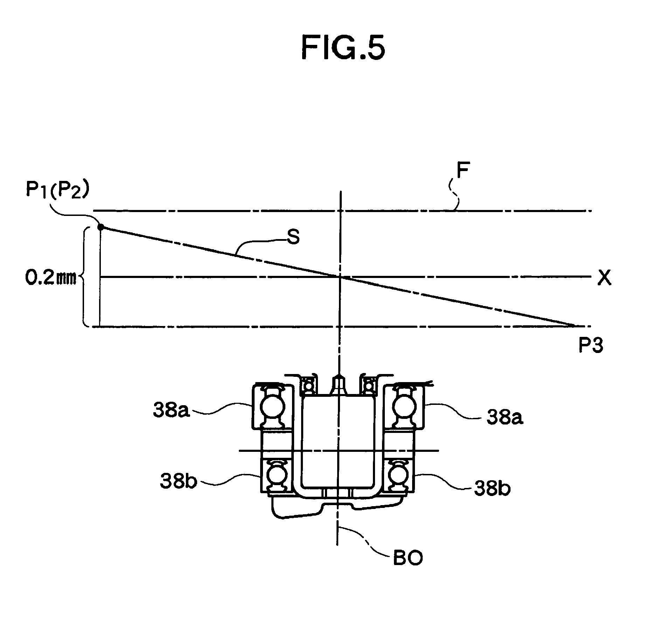

In other words, in the present embodiment, as shown in Fig. 5, the stator yoke 60 is inclined in such a manner that the first and the second teeth 61a1 and 61a2 are closer to surface of the magnet 45 opposing the stator than the third tooth 61a3, so that the plane including the first and the second points P1 and P2 and the third point P3 is inclined with respect to the perpendicular direction X.

On the other hand, as shown in Fig. 3, two flanges 64a1, 64a2 positioned on the upper side in a state in which the stator 41 is mounted to the rear end section 20a of the rear arm 20 are disposed substantially symmetrically with respect to a line L passing an uppermost point M1 and a lowermost point M2 in a state in which the stator 41 is mounted.

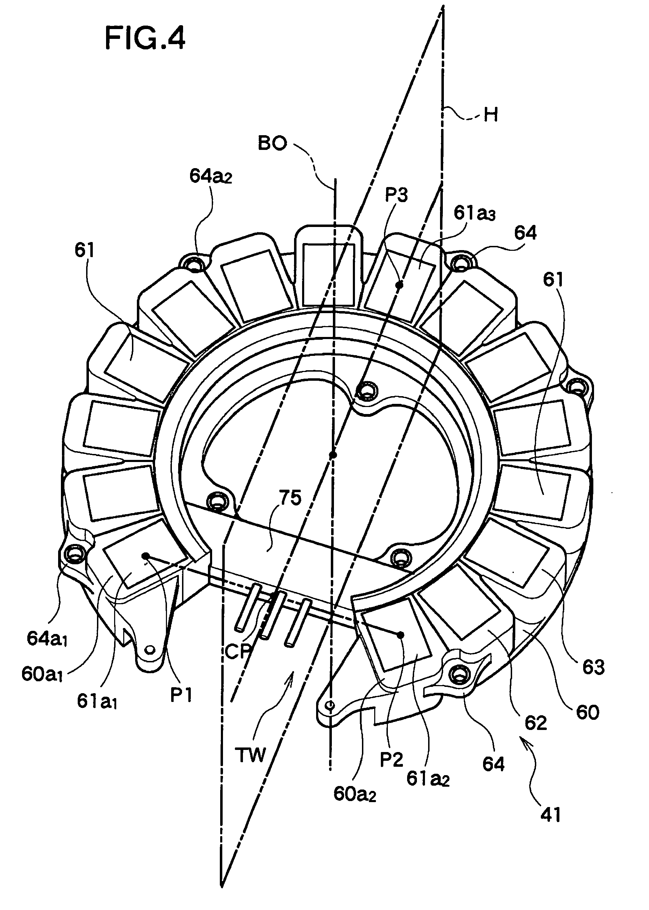

In addition, as shown in Fig. 4 and Fig. 5, the opposing inner peripheral portions at both ends 60a1, 60a2 of the stator yoke 60 on the side of the removed portion TW are connected by a connecting yoke 75.

Subsequently, the operation of the electric motor 28 having such construction will be described focusing on the operation based on the construction of the stator 41.

In the electric motor 28, a magnetic circuit is formed between the rotor 40 and the stator 41, and a magnetic flux supplied from the N-pole of the magnet 45 of the rotor 40 flows from the teeth 61 to the stator yoke 60, and then to the S-pole of the magnet 45 via other teeth 61.

In this case, since the plurality of teeth 61 of the stator 41 are disposed substantially in the partly removed circular shape having the midpoint at the center axis BO, when the first and the second points P1 and P2 on the magnet-opposed surfaces F of the first and the second teeth 61a1 and 61a2 on both sides of the removed portion TW and the third point P3 on the magnet-opposed surface of the third tooth 61a3 positioned on the opposite side of the center axis BO of the bearings 38a, 38b relative to the center point CP between the first and the second teeth 61a1 and 61a2 and being closest to the plane H including the center point CP and the center axis BO are arranged on the identical plane, there may arise difference in attractive force between them (removed portion TW side and the opposite side of the center axis BO).

However, according to the present embodiment, since the plane including the first and the second points P1 and P2 of the first and the second teeth 61a1 and 61a2 and the third point P3 of the third tooth 61 a3 is inclined from the direction X that is perpendicular to the center axis BO of the bearings 38a, 38b in such a manner that the first and the second points P1 and P2 are positioned at a level, for example, about 0.2 mm higher than the third point P3, the gap between the side of the removed portion TW and the surface of the magnet 45 opposing the stator may be set to a smaller value with respect to the gap between the opposite side of the center axis BO relative to the side of the removed portion TW and the surface of the magnet 45 opposing to the stator.

Therefore, unbalance (disequilibrium) between the attractive force of the magnet 45 with respect to the side of the removed portion TW (on the side of the teeth 61a1, 61a2) and the attractive force of the magnet 45 with respect to the opposite side of the center axis BO relative to the side of the removed portion TW (the side of the tooth 61a3) may be alleviated.

As a consequence, inclination of the rotor 40 toward the side of the tooth 61 a3 caused by unbalanced attractive force may be restrained.

In this manner, in a state in which unbalanced attractive force exerted from the magnet 45 with respect to the stator 41 is alleviated, and inclination of the rotor 40 with respect to the tooth 61a3 is restrained, when the coil 62 of a predetermined tooth 61 is energized, the predetermined tooth 61 is energized via the coil 62, and attraction and repulsion occur between the energized predetermined tooth 61 and the magnet 45.

Therefore, by sequentially switching the teeth 61 to be energized via the controller 37 and the inverter 70, the teeth 61 to be energized may be shifted sequentially so that the rotor 40 is rotated with the magnet 45.

In this case, according to the present embodiment, since inclination of the rotor 40 toward the side of the tooth 61 a3 of the rotor 40, that is, toward the opposite side of the center axis BO relative to the side of the removed portion TW is restrained, vibrations/noise based on the rotational movement of the rotor 40 may be reduced.

In addition, since inclination of the rotor 40 toward the opposite side of the center axis BO relative to the side of the removed portion TW is restrained, loss at the gear members (planet gear speed reducer 36 or the like) connected to the motor shaft 42e of the rotor 40 via the revolving shaft 46 may be reduced.

Furthermore, according to the present embodiment, the stator yoke 60 is formed substantially into a ring shape for securing a space of the bearings 38a, 38b of the rotor 40, and part of the ring shape is removed to form the shape of a partly removed circle (ring), so that the controller 37 or the like may be disposed to the removed portion TW to realize downsizing.

In this case, according to the present embodiment, the opposing inner peripheral portions at both ends 60a1, 60a2 of the stator yoke 60 on the side of the removed portion TW are connected by the connecting yoke 75.

In this regard, for example, when the connecting yoke 75 is not provided, the magnetic circuit between the teeth 61a1 and 61a2 in the vicinity of the both side of the removed portion TW is disconnected, and thus the magnetic flux passing through the teeth 61a1 and 61a2 is weakened, which may cause lowering of torque.

However, according to the present embodiment, since the opposing inner peripheral portions at both ends 60a1, 60a2 of the stator yoke 60 on the side of the removed portion TW are connected by the connecting yoke 75, the magnetic circuit between the teeth 61a1 and 61a2 in the vicinity of the both sides of the removed portion TW may be maintained.

Therefore, according to the present embodiment, weakening of the magnetic flux passing between the teeth 61a1 and 61a2 in the vicinity of the both sides of the removed portions TW is prevented and thus lowering of torque may also be prevented while ensuring a space for arranging the controller 37 or the like.

According to the present embodiment, reduction of the attractive force with respect to the teeth on the side of the removed portion may be prevented in comparison with the case in which the connecting yoke 75 is not provided, which contributes to restraint of unbalanced attractive force caused by the presence of the removed portion.

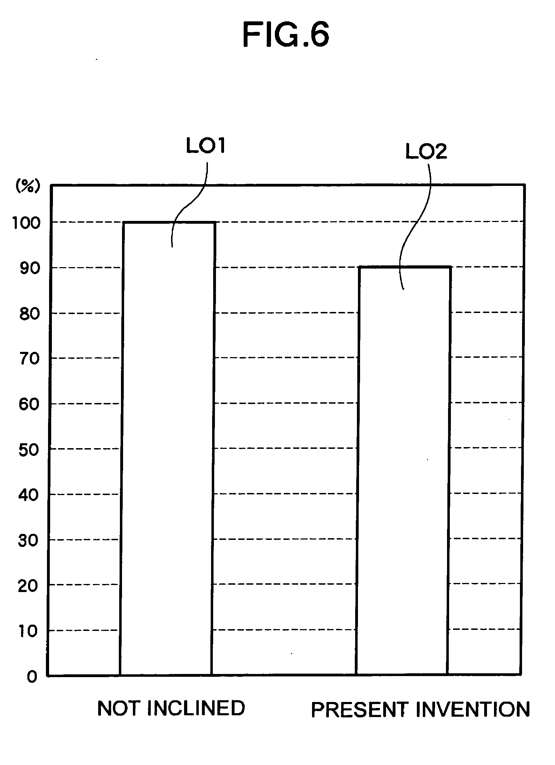

Fig. 6 is a comparative drawing comparing a loss L01 resulted from employment of an electric motor having a construction in which the first and the second points P1 and p2 on the magnet-opposed surfaces of the first and the second teeth 61a1 and 61a2 and the third point P3 on the magnet-opposed surface of the third tooth 61 a3 are in the same plane (not inclined) with a loss L02 resulted from employment of the electric motor 28 having a construction according to the first embodiment of the present invention (the construction in which the plane including the first and the second points P1 and P2 on the magnet-opposed surfaces of the first and the second teeth 61a1 and 61a2 and the third point P3 on the magnet-opposed surface of the third tooth 61 a3 is inclined in such a manner that the first and the second points P1 and P2 are positioned at a level, for example, about 0.2 mm higher than the third point P3) (vertical axis represents the loss (%)).

As shown in Fig. 6, the loss LO2 resulted from the case where the electric motor 28 according to the first embodiment of the present invention is used is about 10% less than the loss LO1 resulted from the case where the electric motor without inclination is used, whereby the effect of the construction (inclined construction) of the present embodiment is proved.

Furthermore, according to the present embodiment, in a state in which the stator 41 is mounted to the rear end section 20a of the rear arm 20, the two flanges 64a1, 64a2 positioned on the upper side are disposed so as to be substantially symmetrical with respect to the line L passing the uppermost point M1 and the lowermost point M2 in the stator 41 mounted state.

In other words, assuming that a flange is provided at the uppermost point M1 in the stator 41 mounted state, for example, when an impact such as turning over of the electric motorcycle 1 occurs, the largest load (impact) is exerted to the flange located at the uppermost point M1. Therefore, a risk that the flange at the upper most point M is damaged increases.

However, according to the present embodiment, since the two flanges 64a1, 64a2 are disposed substantially symmetrically with respect to the line L passing the uppermost point M1 and the lowermost point M2 but not at the uppermost point M1, the impact load may be dispersed to the two flanges 64a1, 64a2.

Accordingly, the electric motor 28 which is resistible to the impact load may be provided while alleviating a risk of damage of the flange by employing just a small number of flanges 64 and bolts 65.

### Second Embodiment

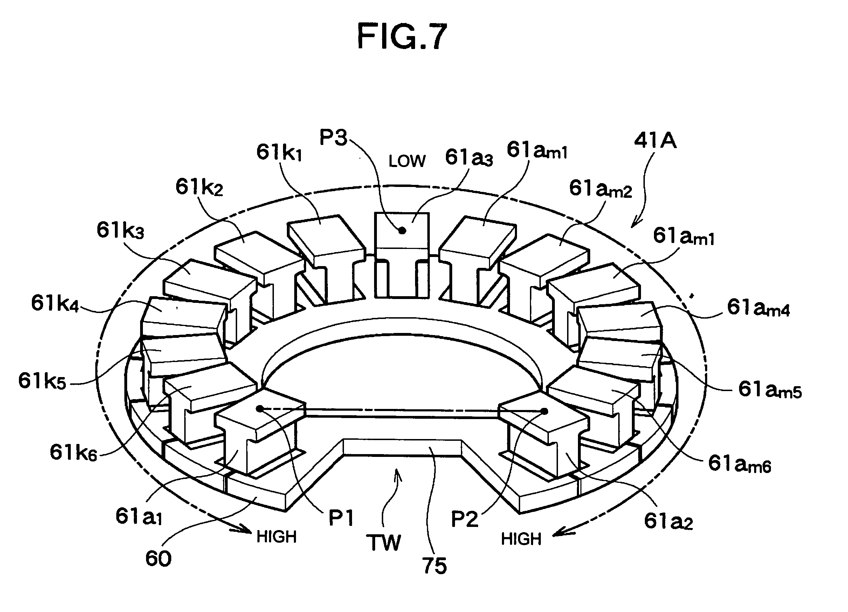

Fig. 7 is a perspective view showing a general construction of a stator 41A of the electric motor according to a second embodiment of the present invention. In the present embodiment, only the construction of the stator 41 is different from the first embodiment. Therefore, description of other components will not be described or will be made only briefly.

As shown in Fig. 7, in the stator 41A of the present embodiment, the stator yoke 60 is not inclined, and the heights of the plurality of the respective teeth 61 are formed so as to increase from the third tooth 61a3 toward the first and the second teeth 61a1 and 61a2 step-by-step in order to incline a plane S1 including the first and the second points P1 and P2 on the magnet-opposed surfaces of the first and the second teeth 61a1 and 61a2 and the third point P3 on the magnet-opposed surface of the third tooth 61a3 in such a manner that the first and the second points P1 and P2 are higher than the third point P3.

In other words, as shown in Fig. 7, the heights of the plurality of teeth from the third tooth 61a3 to the first tooth 61a1, that is, 61a3, 61ak1, 61ak2, ..., 61ak6, 61a1, are such that the height of the third tooth 61 a3 is the lowest and, from the next on, the height of the teeth increases toward the first tooth 61a1, so that the height of the first tooth 61a1 is the highest (the height of the third tooth 61a3 < the height of the tooth 61ak1 < ... < the height of the first tooth 61ak6 < the height of the first tooth 61a1).

Likewise, as shown in Fig. 7, the heights of the plurality of teeth from the third tooth 61 a3 to the second tooth 61a2, that is, 61a3, 61am1, 61am2,..., 61am6, 61a1 are such that the height of the third tooth 61 a3 is the lowest, and from the next on, the height of the teeth increases toward the second tooth 61a2, so that the height of the second tooth 61a2 is the highest (the height of the third tooth 61a3 < the height of the tooth 61am1 < ... < the height of the tooth 61 am6 < the height of the second tooth 61 a2).

Therefore, in the present embodiment, the plane H including the first and the second points P1 and P2 on the magnet opposing the fist and the second teeth 61a1 and 61a2 and the third point P3 on the magnet-opposed surface of the third tooth 61a3 may be inclined in such a manner that the first and the second points P1 and P2 are higher than the third point P3, and thus unbalance (disequilibrium) of the attractive force of the magnet 45 on the rotor with respect to the stator 41 may be alleviated as in the first embodiment.

As a consequence, inclination of the rotor 40 toward the side of the tooth 61 a3 caused by the aforementioned unbalanced attractive force may be restrained.

Particularly, according to the present embodiment, since the heights of the plurality of teeth 61 increase from the third tooth 61a3 toward the first and the second teeth 61a1 and 61a2 step-by-step, fine adjustment of the difference in height of the adjacent teeth is achieved. As a consequence, unbalance (disequilibrium) of the attractive force of the magnet 45 with respect to the teeth 61 may further be alleviated.

### Third Embodiment

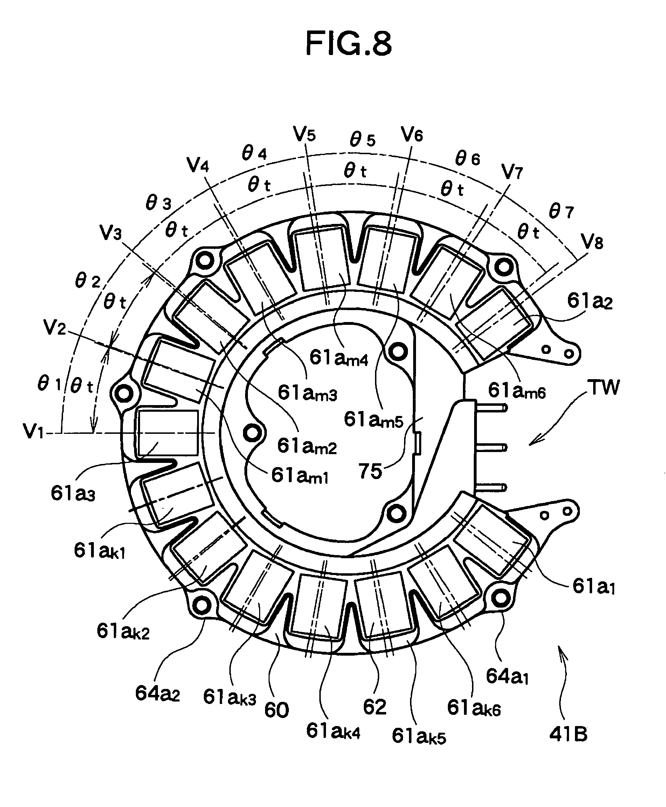

Fig. 8 is a plan view showing a general construction of a stator 41 B of the electric motor according to a third embodiment of the present invention when viewed from the rear wheel side. In the present embodiment, since only the construction of the stator 41 is different from the first embodiment, description of other components will not be described or will be made only briefly.

In the stator 41 B of the present embodiment, unbalance (disequilibrium) of the attractive force of the magnet 45 with respect to the teeth 61 is alleviated by a method different from those in the first and the second embodiments, that is, by making the circumferential pitches among the plurality of teeth 61 uneven. This method is combinable with the ones described before, of course.

In the stator 41 B of the present embodiment, assuming that line segments connecting the centers of the magnet-opposed surfaces of the plurality of teeth from the third tooth 61a3 to the second tooth 61a2, that is, 61a3, 61am1, ..., 61am6, 61a2, and the center axis BO of the bearings 38a, 38b along the opposed surface are V1, V2,..., V8, respectively, the circumferential pitches of the plurality of teeth 61 determined by angles between the adjacent line segments V1-V8 are determined so as to increase in sequence from the third tooth 61a3 toward the first and the second teeth 61a1 and 61a2.

In other words, as shown in Fig. 8, the respective circumferential pitches θ1, θ2,..., θ7 of the plurality of teeth from the third tooth 61a3 to the second tooth 61a2, that is, 61a3, 61am1, ..., 61am6, 61a2, are such that the circumferential pitch θ1 between the third tooth 61 a3 and the adjacent tooth 61am1 is the smallest, and from the next on, the circumferential pitch increases toward the second tooth 61a2, so that the circumferential pitch θ7 between the teeth 61am6 and the second tooth 61a2 is the largest (circumferential pitch θ1 < circumferential pitch θ2 < ... < circumferential pitch θ6 < circumferential pitch θ7).

The signs θt in the drawing represent regular circumferential pitches in the case in which the plurality of teeth from the third tooth 61 a3 to the second tooth 61a2, that is, 61a3, 61am1, ..., 61 am6, 61 a2 are disposed at regular circumferential pitches.

The circumferential pitches of the plurality of teeth from the third tooth 61a3 to the first tooth 61a1, that is, 61a3, 61ak1, ..., 61ak6, 61a1, are the same as the case of the plurality of teeth from 61a3 to 61a2, and are such that the circumferential pitch between the third tooth 61a3 and the adjacent tooth 61ak1 is the smallest and from the next on, the circumferential pitch increases in sequence toward the first tooth 61a1, so that the circumferential pitch is the largest between the tooth 61ak6 and the first tooth 61a1.

Therefore, according to the present embodiment, as shown in Fig. 8, the plurality of teeth 61 can be positioned closer to the removed portion TW than the case in which the plurality of teeth 61 are disposed at regular circumferential pitches θt. In other words, according to the present embodiment, the teeth may be shifted toward the removed portion TW by increasing the circumferential pitches of the teeth 61a1, 61ak1-61ak6, 61a2, 61am1-61am2 other than the third tooth 61 a3.

As a consequence, overall distribution of the plurality of teeth 61, that is, distribution of the steel plate (iron) on the stator yoke 60 may be increased on the side of the removed portion TW and decreased on the opposed teeth 61 a3 side.

In other words, according to the present embodiment, the attractive force of the magnet 45 with respect to the removed portion TW may be increased and in contrast, the attractive force of the magnet 45 with respect to the tooth 61 a3 may be decreased corresponding to the increased amount of the steel plate (iron) on the stator yoke 60. Therefore, unbalance (disequilibrium) of the attractive force of the magnet 45 with respect to the side of the removed portion TW and the opposite side (tooth 61a3 and so on) of the center axis BO may be alleviated, and inclination of the rotor 40 caused by unbalance of the attractive force may be restrained, so that vibrations/noise, or loss may be reduced.

According to the present embodiment, the circumferential pitches among the plurality of teeth 61 are determined to be uneven so as to increase from the third tooth 61 a3 toward the first and the second teeth 61a1 and 61a2 in sequence. However the present invention is not limited thereto, and any uneven pitches may be applicable as long as overall distribution of the plurality of teeth 61 can be increased on the side of the removed portion TW, and decreased on the opposed tooth 61 a3 side, so that the attractive force of the magnet 45 with respect to the side of the removed portion TW can be increased.

### Fourth Embodiment

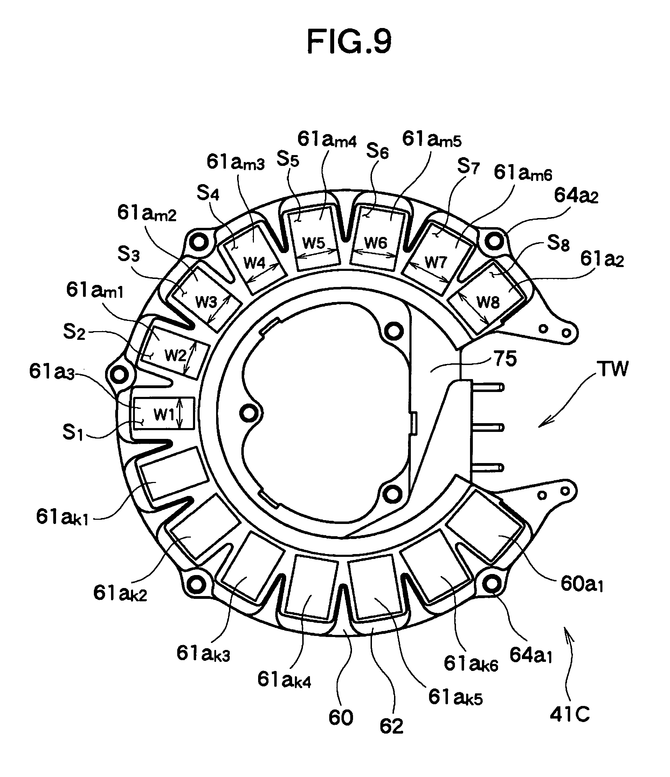

Fig. 9 is a plan view showing a general construction of a stator 41C of the electric motor according to the fourth embodiment of the present invention when viewed from the rear wheel side. In the present embodiment, since only the construction of the stator 41 is different from the first embodiment, description of other components will not be described or will be made only briefly.

In the stator 41C of the present embodiment, as a method of changing distribution of the steel plate (iron) on the stator yoke 60, unbalance (disequilibrium) of the attractive force of the magnet 45 with respect to the teeth 61 is alleviated by making the area of the magnet-opposed surfaces of the plurality of teeth 61 uneven.

In other words, in the stator 41C according to the present embodiment, the areas S1, S2,..., S8 of the magnet-opposed surfaces of the plurality of teeth from the third tooth 61a3 to the second tooth 61a2, that is, teeth 61a3, 61am1, ..., 61am6, 61a2, respectively, are increased in sequence from the third tooth 61 a3 toward the first and the second teeth 61a1 and 6 1 a2.

An example of a specfic method for increasing the areas in sequence, according to the present embodiment, the widths W1, W2,..., W8 along the shorter sides of the magnet-opposed surfaces of the plurality of teeth from the third tooth 61a3 to the second tooth 61a2, that is, 61a3, 61am1, ..., 61am6, 61a2, are increased in sequence from the third tooth 61 a3 toward the first and the second teeth 61a1 and 61 a2.

In other words, as shown in Fig. 9, the areas S1, S2,..., S8 of the magnet-opposed surfaces (the widths W1, W2,..., W8 of the magnet-opposed surfaces) of the plurality of teeth from the third tooth 61 a3 to the second tooth 61a2, that is, teeth 61a3, 61am1, ..., 61am6, 61a2, respectively, are the smallest (shortest) at the third tooth 61a3, and from the next on, are increasing in sequence toward the second tooth 61a2, and the area S8 of the magnet-opposed surface of the second teeth 61a2 (the width of the magnet-opposed surface W8) is the largest (longest){area of magnet-opposed surface S1 (width W1 of magnet-opposed surface) < area S2 of magnet-opposed surface (width W2 of magnet-opposed surface) < .. < area S7 of magnet-opposed surface (width W7 of magnet-opposed surface) < area S8 of magnet-opposed surface (width W8 of magnet-opposed surface)}.

The areas of the magnet-opposed surfaces (the width of the magnet-opposed surfaces) of the plurality of teeth from the third tooth 61 a3 to the first tooth 61a1, that is, 61a3, 61ak1,..., 61ak6, 61a1, are the same as in the case of the plurality of teeth 61a3-61a2. and the area of the magnet-opposed surface (the width of the magnet-opposed surface) is the smallest (shortest) at the third teeth 61a3, and from the next on, increases toward the first tooth 61a1 in sequence, so that the area of the magnet-opposed surface (width of the magnet-opposed surface) of the first tooth 61a1 is the largest (longest).

In other words, according to the present embodiment, as shown in Fig. 9, the area of the magnet-opposed surface, that is, the amount of iron of the tooth 61a3 on the opposite side of the center axis BO relative to the removed portion TW is smallest, and from the next on, the areas of the magnet-opposed surfaces increase toward the removed portion TW in sequence, so that the areas of the magnet-opposed surfaces of the teeth 61a1 and 61 a2 which are the closest to the removed portion TW, are the largest.

Therefore, distribution of iron on the stator yoke 60 may be deflected from the third tooth 61 a3 toward the removed portion TW according to the change of the magnet-opposed surface thereof.

As a consequence, overall distribution of the plurality of teeth 61, that is, distribution of the steel plates (iron) on the stator yoke 60 may be increased on the side of the removed portion TW and decreased on the opposed tooth 61 a3 side.

That is, according to the present embodiment, as in the case of the third embodiment, the attractive force of the magnet 45 with respect to the side of the removed portion TW may be increased by the extent corresponding to the increased amount of the steel plate (iron) on the stator yoke 60, and in contrast, the attractive force of the magnet 45 with respect to the tooth 61a3 may be reduced. Therefore, unbalance (disequilibrium) of the attractive force of the magnet 45 with respect to the opposite side of the center axis BO relative to the side of the removed portion TW (e.g., tooth 61a3) may be alleviated, and thus inclination of the rotor 40 caused by the unbalanced attractive force may be restrained and thus vibrations/noise or loss may be reduced.

In the present embodiment, as a specific method for increasing the areas of the magnet-opposed surfaces of the plurality of teeth from the third tooth 61 a3 to the first and the second teeth 61a1 and 61a2, the widths of the shorter sides of the magnet-opposed surface of the plurality of teeth from the third tooth 61a3 to the first and the second teeth 61a1 and 61a2 are increased in sequence. However, the present invention is not limited to, and what is required is only that the areas of the magnet-opposed surfaces from the third tooth 61a3 to the first and the second teeth 61a1 and 61a2 can be increased, and thus increase in longitudinal width of the magnet-opposed surfaces or deformation of the magnet-opposed surfaces may also be applicable.

In addition, in the present embodiment, the areas of the respective magnet-opposed surfaces of the plurality of teeth 61 are uneven such that it increases from the third tooth 61a3 to the first and the second teeth 61a1 and 61a2 in sequence. However, the present invention is not limited thereto, and any uneven areas are included as long as overall distribution of the plurality of teeth 61 may be increased to the side of the removed portion TW, and decreased on the opposed tooth 61 a3 side, so that the attractive force of the magnet 45 with respect to the side of the removed portion TW is increased.

### Fifth Embodiment

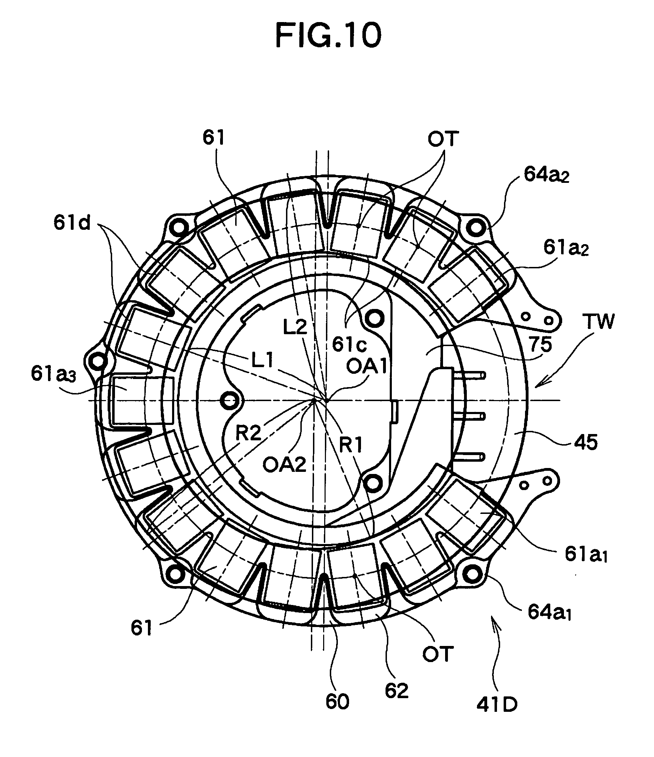

Fig. 10 is a plan view showing a general construction of a stator 41D of the electric motor according to the fifth embodiment of the present invention when viewed from the rear wheel side. In the present embodiment, since only the construction of the stator 41 is different from the first embodiment, description of other components will not be described or will be made only briefly.

In Fig. 10, reference sign OA1 designates a center of the plurality of teeth 61 disposed in the shape of a partly removed circle (the center of a circle formed by connecting the centers OT of the respective magnet-opposed surfaces of the plurality of teeth 61), and reference sign OA2 represents the center (the center axis BO of the bearings 38a, 38b) of the revolving shaft 42e of the rotor 40, which corresponds to the center of the ring-shaped magnet 45.

According to the present embodiment, as shown in Fig. 10, a first length L1 along the radial direction between respective surfaces 61 c on the inner peripheral sides of the respective teeth 61 and the center OA1 of the partly removed circle and the length of the inner radius R1 of the ring-shaped magnet 45 are substantially aligned, and a second length L2 along the radial direction between surfaces 61 d on the outer peripheral surfaces of the respective teeth 61 and the center OA1 of the partly removed circle and the length of the outer radius R2 of the ring-shaped magnet 45 are substantially aligned.

In addition, as is clear from Fig. 10, according to the present embodiment, the center OA1 of the plurality of teeth 61 disposed in the partly removed circle and the center OA2 of the revolving shaft 42e of the rotor 40 (the center of the ring-shaped magnet 45) are deviated along the radial direction so that the removed portion TW is shifted away from the center OA2 of the revolving shaft 42e of the rotor 40.

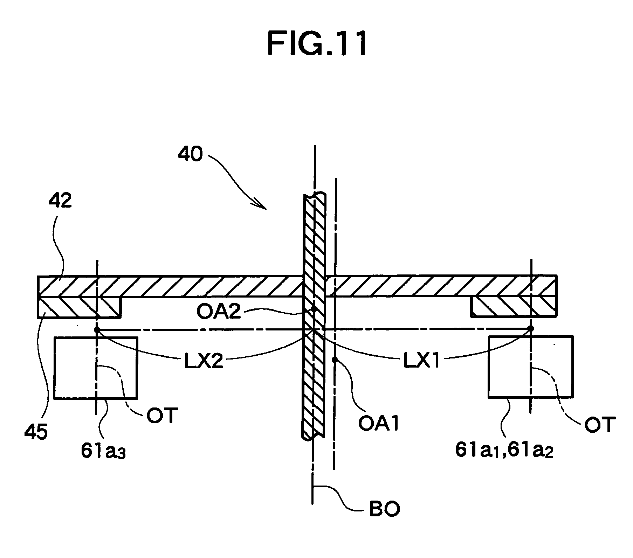

Owing to such deviation, as shown in Fig. 11, the length LX1 from the centerline passing through the center OA2 of the revolving shaft of the rotor 40 (identical to the center axis BO of the bearings 38a, 38b) to a predetermined position (for example, the center OT) of the teeth on the side of the removed portion TW (e.g., teeth 61a1, 61 a2) may be set to a length longer than the length LX2 to a corresponding predetermined position (the center OT) of the teeth (for example, tooth 61a3) on the opposite side of the center axis BO relative to the removed portion TW.

In this case, moment along the center axis BO exerted to the teeth (e.g., teeth 61a1, 61a2) on the side of the removed portion TW with respect to the center OA2 of the revolving shaft of the rotor 40, that is, moment based on the attractive force of the magnet 45 {obtained from a product of a force exerted to the teeth (magnetic force; attractive force) and a length to the teeth} is such that moment on the tooth 61a3 side which is opposite from the side of the removed portion TW is larger and thus the rotor 40 is inclined toward the tooth 61 a3 side since the attractive force of the magnet 45 is not even in case of normal arrangement (when the center OA2 of the revolving shaft of the rotor 40 coincides with the center OA1 of the pertly-removed circle).

However, according to the present embodiment, since the length LX1 from the center axis BO passing through the center OA2 of the revolving shaft of the rotor 40 to the teeth on the side of the removed portion TW may be set to a length longer than the length LX2 to the teeth on the opposite side of the center axis BO relative to the removed portion TW, lack of magnetic force caused by missing of teeth on the side of the removed portion TW may be compensated by the aforementioned increase in length to the teeth on the side of the removed portion TW.

Therefore, moment generated by the attractive force of a magnet 45A with respect to the plurality of teeth on the side of the removed portion TW about the center OA2 of revolving shaft of the rotor 40 (center axis BO) and moment generated by the plurality of teeth on the opposite side of the center axis BO relative to the removed portion TW may be balanced. As a consequence, inclination of the rotor 40 toward the opposite side of the center axis BO relative to the removed portion TW is alleviated and thus vibrations/noise or lost may be removed.

### Sixth Embodiment

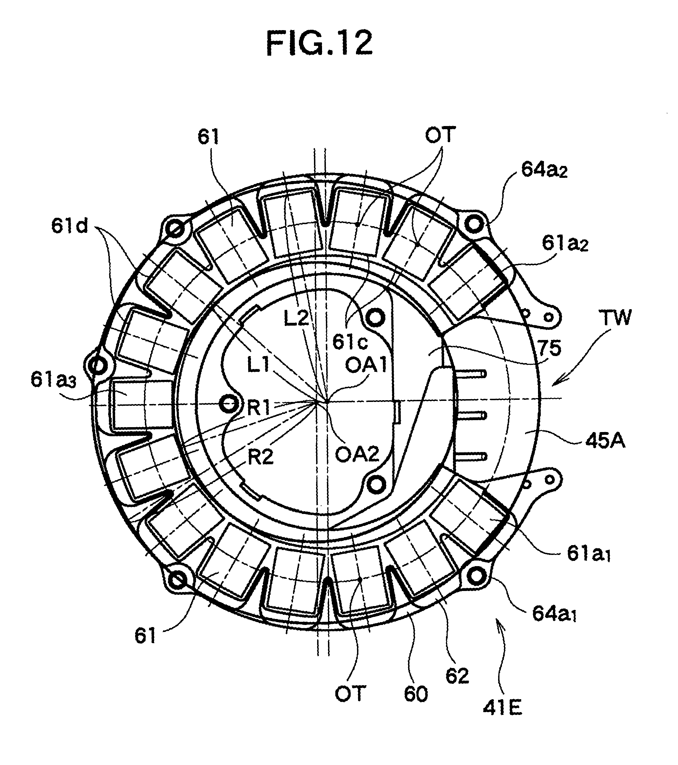

Fig. 12 is a plan view of a general construction of a stator 41 E of the electric motor according to the sixth embodiment of the present invention when viewed from the rear wheel side. In the present embodiment, the construction of the rotor described in conjunction with the fifth embodiment is different.

In other words, in the ring-shaped magnet 45A according to the present embodiment, as shown in Fig. 12, the length of the inner radius R1 of the ring-shaped magnet 45A is shorter than the first length L1 along the radial direction between the inner peripheral surfaces 61c of the respective teeth 61 and the center OA1 of the partly removed circle, and the length of the outer radius R2 of the ring-shaped magnet 45 is longer than the second length L2 along the radial direction between the outer peripheral surfaces 61 d of the respective teeth 61 and the center OA1 of the partly removed circle.

In addition, as is clear from Fig. 12, according to the present embodiment, the center OA1 of the plurality of teeth 61 disposed into the shape of a partly removed circle and the center OA2 of the revolving shaft 42e of the rotor 40 (center of the ring-shaped magnet 45A) are deviated along the direction of diameter so that the removed portion TW is shifted away from the center OA2 of the revolving shaft 42e of the rotor 40.

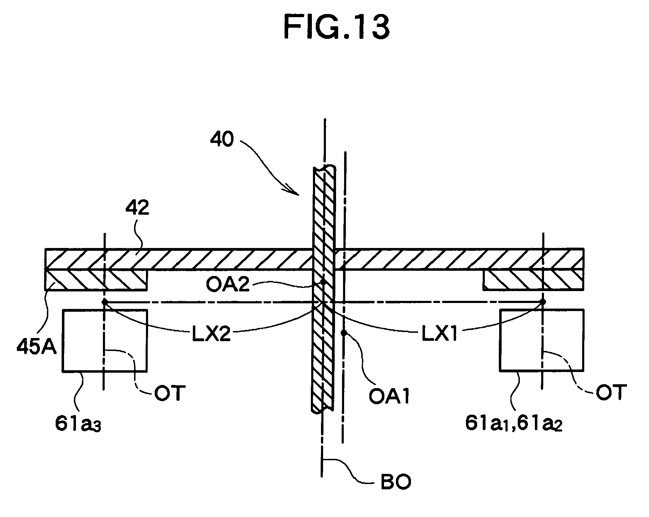

Owing to such deviation, as shown in Fig. 13, the length LX1 from the centerline passing through the center OA2 of the revolving shaft of the rotor 40 (the center axis BO) to a predetermined position (for example, the center OT) of the teeth on the side of the removed portion TW (e.g., teeth 61a1, 61a2) may be set to a length longer than the length LX2 to a corresponding predetermined position (the center OT) of the teeth (for example, tooth 61 a3) on the opposite side of the center axis BO relative to the removed portion TW.

In other words, according to the present embodiment as well, as in the fifth embodiment, since the length LX1 from the center axis BO passing through the center OA2 of the revolving shaft of the rotor 40 to the teeth on the side of the removed portion TW may be set to a length longer than the length LX2 to the teeth on the opposite side of the center axis BO relative to the removed portion TW, lack of magnetic force caused by missing of teeth on the side of the removed portion TW may be compensated by the aforementioned increase in length to the teeth on the side of the removed portion TW.

Therefore, moment generated by the attractive force of the magnet 45A with respect to the plurality of teeth on the side of the removed portion TW about the center OA2 of the revolving shaft of the rotor 40 (center axis BO) and moment generated by the plurality of teeth on the opposite side of the center axis BO relative to the removed portion TW may be balanced. As a consequence, inclination of the rotor 40 toward the opposite side of the center axis BO relative to the removed portion TW is alleviated and thus vibrations/noise or lost may be removed.

In addition, according to the present embodiment, since the length of the inner radius R1 of the ring-shaped magnet 45A is shorter than the first length L1 along the radial direction between the inner peripheral surfaces 61c of the respective teeth and the center OA1 of the partly removed circle, and the length of the outer radius R2 of the ring-shaped magnet 45A is longer than the second length L2 along the radial direction between the outer peripheral surfaces 61d of the respective teeth and the center OA1 of the partly removed circle, as shown in Fig. 12, the magnet-opposed surface of all the teeth 61 can be faced to the magnet 45A completely (all the teeth 61 can be positioned in the ring-shaped region of the magnet 45A), so that inclination of the rotor 40 may be restrained without lowering the amount of magnetic flux (lowering torque).

### Seventh Embodiment

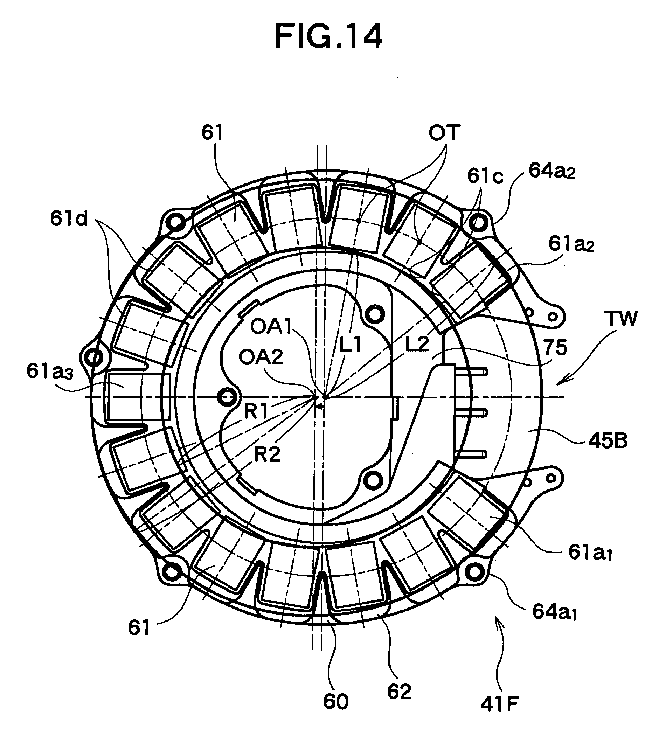

Fig. 14 is a plan view showing a general construction of a stator 41 F of the electric motor according to the seventh embodiment of the present invention when viewed from the rear wheel side. In the present embodiment, the construction of the rotor described in conjunction with the fifth embodiment or with the sixth embodiment is different

In other words, in the present embodiment, as shown in Fig. 14, the length of the inner radius R1 of a ring-shaped magnet 45B and the first length L1 along the radial direction between the surfaces 61 c on the inner peripheral side of the respective teeth 61 and the center OA1 of the partly removed circle are substantially aligned, and the length of the outer radius R2 of the ring-shaped magnet 45B is set to the length longer than the second length L2 along the radial direction between the outer peripheral surfaces 61 d of the respective teeth 61 and the center OA1 of the partly removed circle.

In addition, as is clear from Fig. 14, in the present embodiment as well, the center OA1 of the plurality of teeth 61 arranged in the shape of a partly removed circle and the center OA2 (center of the ring-shaped magnet 458) of the revolving shaft 42e of the rotor 40 are deviated along the direction of diameter so that the removed portion TW is shifted away from the center OA2 of the revolving shaft 42e of the rotor 40.

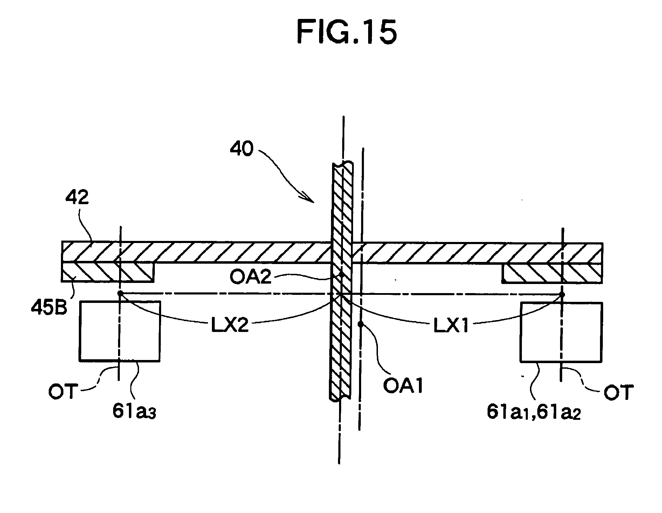

Owing to such deviation, as shown in Fig. 15, the length LX1 from the centerline passing through the center OA2 of the rotational shaft of the rotor 40 (the center axis BO) to a predetermined position (for example, the center OT) of the teeth on the side of the removed portion TW (e.g., teeth 61a1, 61a2) may be set to a length longer than the length LX2 to a corresponding predetermined position (the center OT) of the teeth (for example, tooth 61a3) on the opposite side of the center axis BO relative to the removed portion TW.

In other words, in the present embodiment as well, as in the fourth or fifth embodiment, since the length LX1 from the center axis BO passing through the center OA2 of the revolving shaft of the rotor 40 to the teeth on the side of the removed portion TW may be set to a length longer than the length LX2 to the teeth on the opposite side of the center axis BO relative to the removed portion TW, lack of magnetic force caused by missing of teeth on the side of the removed portion TW may be compensated by the aforementioned increase in length to the teeth on the side of the removed portion TW.

Therefore, moment generated by the attractive force of the magnet 45B with respect to the plurality of teeth on the side of the removed portion TW about the center OA2 of revolving shaft of the rotor 40 (center axis BO) and moment generated by the plurality of teeth on the opposite side of the center axis BO relative to the removed portion TW may be balanced. As a consequence, inclination of the rotor 40 toward the opposite side of the center axis BO relative to the removed portion TW is alleviated and thus vibrations/noise or lost may be removed.

In addition, in the present embodiment, as shown in Fig. 15, the length LX1 may be set to a length longer than the length LX2, the magnet-opposed surfaces of the teeth (for example, the teeth 61a1, 61a2) on the side of the removed portion TW may be opposed to the magnet 45B substantially completely, and the areas of the magnet 45B opposed surfaces of a teeth (for example, the teeth 61a3) on the opposite side of the center axis BO relative to the removed portion TW may be reduced.

Such reduction of the area of the magnet-opposed surface on the opposite side of the center axis BO relative to the removed portion TW enables reduction of the attractive force of the magnet, and unbalance of the attractive force of the magnet between the removed portion TW and the opposite side of the center axis BO relative to the removed portion TW may be balanced.

The fifth to the seventh embodiments simply show examples of the relations between the first and the second lengths L1 and L2 along the radial direction between the inner peripheral surfaces 61 c and the outer peripheral surfaces 61 d of the respective teeth 61 and the center OA1 of the partly removed circle, and the inner radius R1 and the outer radius R2 of the ring-shaped magnet 45 (45A, 45B) are shown.

In other words, the magnitude relation between the inner radius and the outer radius of the magnet 45 (45A, 45B), and the first and the second lengths L1 and L2 between the inner peripheral surfaces 61c and the outer peripheral surfaces 61 d of the respective teeth 61 and the center OA1 of the partly removed circle may be determined as appropriate as far as the construction is such that the center OA1 of the plurality of teeth 61 and the center OA2 of the revolving shaft 42e of the rotor 40 are deviated so that moment on the side of the removed portion TW and moment on the opposite side of the center axis BO relative to the removed portion TW may be balanced.

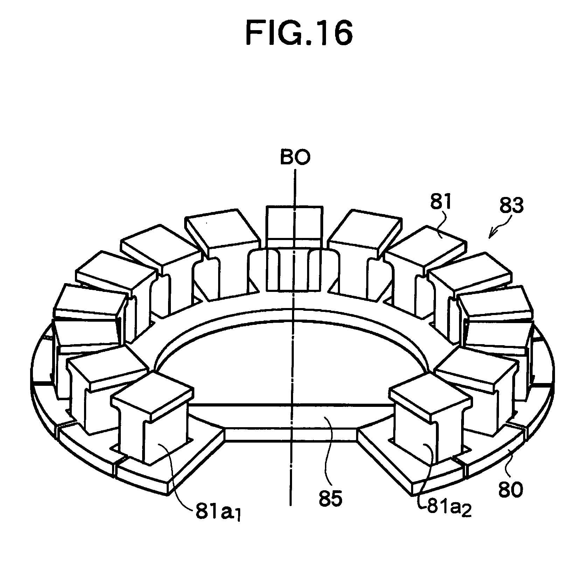

In a stator 83 provided with a plurality of teeth 81 disposed on the magnet 45 opposed surface of a stator yoke 80 formed substantially in the shape of a partly removed circle according to the first to the seventh embodiments, as shown in Fig. 16, it is also possible to simply connect the opposing inner peripheral portions on both ends 80a1 and 80a2 on the side of the removed portion TW of the stator yoke 80 by a connecting yoke 85.

In this construction as well, as described above in conjunction with the first embodiment, the magnetic circle between teeth 81a1 and 81a2 in the vicinity of both sides of the removed portion TW may be maintained by the connecting yoke 85.

Therefore, according to this modification as well, lowering of the magnetic flux passing between the teeth 81a1 and 81a2 in the vicinity of the both sides of the removed portion TW may be prevented while securing a space for accommodating the controller 37 or the like by the removed portion TW, and thus reduction of torque may be prevented.

In addition, according to this modification, lowering of the attractive force of the teeth on the side of the removed portion may be prevented in comparison with the case in which there is no connecting yoke 85, which contributes to alleviation of unbalance of the attractive force caused by the presence of the removed portion.

Although the case in which the electric motor which corresponds to the axial gap dynamo-electric machine according to the present invention is mounted to the motorcycle has been described in the above-described embodiments, the present invention is not limited thereto, and it may be mounted on other apparatus/equipment, and the effects as described above may be achieved.

In addition, the case in which the axial gap dynamo-electric motor (electric motor) as an axial gap dynamo-electric machine according to the present invention has been described in the embodiments described above, the present invention is not limited thereto, and it is also used as so-called electric generator, which allows a coil to generate electromotive force by rotating the rotor from the outside.

The invention is not limited to the above-described first to the seventh embodiments, and may be embodied in other modes by modifying as desired within the scope of the claims of the invention. In particular, the respective embodiments and/or features thereof may be combined amongst each other with one or more of the embodiments.

The above description discloses an axial gap dynamo-electric machine in which a rotor having a revolving shaft supported by a bearing and a magnet for magnetic field are rotated, including a stator yoke disposed so as to oppose the rotor, and a plurality of teeth being disposed on the surface of the stator yoke so as to oppose the magnet in the shape of a partly removed circle having a midpoint thereof at a predetermined point on the center axis of the bearing and opposing the magnet at a predetermined gap, wherein a plane including first and second points on the magnet-opposed surfaces of the first and the second teeth out of the plurality of teeth on both sides of the removed portion and a third point on the magnet-opposed surface of the third tooth positioned on the opposite side of the center axis of the bearing relative to the center point between the first and the second teeth and being closest to a plane including the center point and the center axis is inclined from the direction perpendicular to the center axis of the bearing.

Further, an axial gap dynamo-electric machine is described in which a rotor having a revolving shaft and a magnet for magnetic field are rotated including: a stator yoke disposed so as to oppose the rotor; and a plurality of teeth being disposed on the surface of the stator yoke so as to oppose the magnet substantially in the shape of a partly removed circle having a midpoint thereof at a predetermined point on the center axis of the revolving shaft and opposing the magnet at a predetermined gap, wherein circumferential pitches among the plurality of teeth are uneven so that an attractive force of the magnet with respect to the removed portion increases.

In addition, an axial gap dynamo-electric machine is explained in which a rotor having a revolving shaft and a magnet for magnetic field are rotated including: a stator yoke disposed so as to oppose the rotor, and a plurality of teeth being disposed on the surface of the stator yoke so as to oppose the magnet substantially in the shape of a partly removed circle having a midpoint thereof on the center axis of the revolving shaft and opposing the magnet at a predetermined gap, wherein an areas of the plurality of teeth opposing to the magnet are uneven so that an attractive force of the magnet with respect to the removed portion increases.

Moreover, an axial gap dynamo-electric machine is described in which a rotor having a revolving shaft and a magnet for magnetic field are rotated including: a stator yoke disposed so as to oppose the rotor; and a plurality of teeth being disposed on the surface of the stator yoke so as to oppose the magnet substantially in the shape of a partly removed circle having a midpoint thereof at a predetermined point on the center axis of the bearing and opposing the magnet at a predetermined gap, wherein the center of the revolving shaft is deviated from the midpoint of the partly removed circle in the direction away from the removed portion.

Further, an axial gap dynamo-electric machine is presented in which a rotor having a revolving shaft and a magnet for magnetic field are rotated including: a stator yoke in a partly removed ring shape disposed so as to oppose the rotor; and a plurality of teeth being disposed on the surface of the stator yoke so as to oppose the magnet substantially in the shape of a partly removed circle having a midpoint thereof on the center axis of the bearing and opposing the magnet at a predetermined gap, and a connecting yoke for connecting the removed portion of the stator yoke.

In other words, an axial gap dynamo-electric machine in which a rotor having a revolving shaft supported by a bearing and a magnet for magnetic field are rotated is described above, the machine comprising a stator yoke disposed so as to oppose the rotor, and a plurality of teeth being disposed on the magnet-opposed surface of the stator yoke substantially in the shape of a partly removed circle having a midpoint thereof at a predetermined point on a center axis of the bearing and opposing the magnet at a predetermined gap, wherein a plane including first and second points on the magnet-opposed surfaces of the first and the second teeth out of the plurality of teeth on both sides of the removed portion and a third point on the magnet-opposed surface of the third tooth positioned on the opposite side of the center axis of the bearing relative to the center point between the first and the second teeth and being closest to the plane including the center point and the center axis is inclined from the direction perpendicular to the center axis of the bearing.

Therein, preferably the opposed surface of the stator yoke is inclined so that the magnet-opposed surfaces of the first and the second teeth move from the direction perpendicular to the center axis of the bearing toward the magnet.

Further, preferably the heights of the plurality of teeth are formed so as to increase from the third tooth toward the first and the second teeth step-by-step.

Also, an axial gap dynamo-electric machine in which a rotor having a revolving shaft and a magnet for magnetic field are rotated is explained comprising a stator yoke disposed so as to oppose the rotor, and a plurality of teeth being disposed on the magnet-opposed surface of the stator yoke substantially in the shape of a partly removed circle having a midpoint thereof at a predetermined point on the center axis of the revolving shaft and opposing the magnet at a predetermined gap, wherein circumferential pitches among the plurality of teeth are uneven so that an attractive force of the magnet with respect to the removed portion increases.

Therein, the circumferential pitches among the plurality of teeth are increased from the third teeth positioned on the opposite side of the center axis relative to the midpoint between the first and the second teeth on both sides of the removed portion of the plurality of teeth at the position closest to the plane including the midpoint and the center axis toward the fist and the second teeth in sequence.

Moreover, an axial gap dynamo-electric machine is presented in which a rotor having a revolving shaft and a magnet for magnetic field are rotated comprising a stator yoke disposed so as to oppose the rotor, and a plurality of teeth being disposed on the magnet-opposed surface of the stator yoke substantially in the shape of a partly removed circle having a midpoint thereof on the center axis of the revolving shaft and opposing the magnet at a predetermined gap, wherein an areas of the magnet-opposed surfaces of the plurality of teeth are uneven so that an attractive force of the magnet with respect to the removed portion increases.

Preferably, the areas of the magnet-opposed surfaces of the plurality of teeth are increased from the third teeth positioned on the opposite side of the center axis of the bearings relative to the midpoint between the first and the second teeth on both sides of the removed portion of the plurality of teeth at the position closest to the plane including the midpoint and the center axis toward the fist and the second teeth in sequence.

Therein, preferably the widths of the magnet-opposed surfaces of the plurality of teeth are increased from the third tooth to the first and the second teeth in sequence.

Moreover, an axial gap dynamo-electric machine in which a rotor having a revolving shaft and a magnet for magnetic field are rotated is explained comprising a stator yoke disposed so as to oppose the rotor, and a plurality of teeth being disposed on the magnet-opposed surface of the stator yoke substantially in the shape of a partly removed circle having a midpoint thereof at a predetermined point on the center axis of the bearing and opposing the magnet at a predetermined gap, wherein the center of the revolving shaft is deviated from the midpoint of the partly removed circle in the direction away from the removed portion.

Therein, preferably the magnet is formed into a ring shape coaxial with the center of the revolving shaft of the rotor, and a first length along the radial direction between respective surfaces on the inner peripheral sides of the respective teeth and the center of the partly removed circle and the length of the inner radius of the ring-shaped magnet are substantially aligned, and a second length along the radial direction between the outer peripheral surfaces of the respective teeth and the center of the partly removed circle and the length of the outer radius of the ring-shaped magnet are substantially aligned.

Also, preferably the magnet is formed into a ring shape coaxial with the center of the revolving shaft of the rotor, and the length of the inner radius of the ring-shaped magnet is shorter than the first length along the radial direction between the inner peripheral surfaces of the respective teeth and the center of the partly removed circle, and the length of the outer radius of the ring-shaped magnet is longer than the second length along the radial direction between the outer peripheral surfaces of the respective teeth and the center of the partly removed circle.

Also, preferably the magnet is formed into a ring shape coaxial with the center of the revolving shaft of the rotor, a first length along the radial direction between respective surfaces on the inner peripheral sides of the respective teeth and the center of the partly removed circle and the length of the inner radius of the ring-shaped magnet are substantially aligned, and the length of the outer radius of the ring-shaped magnet is longer than the second length along the radial direction between the outer peripheral surfaces of the respective teeth and the center of the partly removed circle.

Still further, an axial gap dynamo-electric machine in which a rotor having a revolving shaft and a magnet for magnetic field are rotated is provided comprising a stator yoke in a partly removed ring shape disposed so as to oppose the rotor, and a plurality of teeth being disposed on the surface of the stator yoke so as to oppose the magnet substantially in the shape of a partly removed circle having a midpoint thereof on the center axis of the bearing and opposing the magnet at a predetermined gap, and a connecting yoke for connecting the removed portion of the stator yoke.

In any case, preferably the plurality of teeth are disposed on the opposed surface of the stator yoke, and are constructed as a stator by the stator yoke and the plurality of teeth, wherein the stator further comprises a plurality of flanges for mounting the stator, wherein the plurality of flanges include two flanges positioned on the upper side in a state in which the stator is mounted, wherein the two flanges positioned on the upper side are arranged so as to be substantially symmetrical with respect to a line passing the uppermost point and the lowermost point of the stator in the mounted state.

As explained above, an axial gap dynamo-electric machine is provided in which inclination of a rotor caused by missing of teeth is restrained.

According to an embodiment, a plane S including first and second points P1 and P2 on a magnet-opposed surfaces of first and second teeth 61a1 and 61a2 out of a plurality of teeth 61 located on both sides of a removed portion TW and a third point P3 on a magnet-opposed surface of a third teeth 61a3 located on the opposite side of a center axis BO of a bearing relative to a center point CP between the first and the second teeth 61a1 and 61a2 at a position closest to a plane H including the center point and the center axis BO inclines from a perpendicular direction with respect to the center axis BO of the bearing.

In a preferred embodiment, an axial gap dynamo-electric machine comprises a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth. The partially removed circle has a midpoint at a predetermined point in relation to a center axis of the bearing and opposes the magnet at a predetermined gap. An axial and/or radial width of the gap defined between the magnet and areas of the respectively magnet-opposed surfaces of the teeth is varied along the circumference of the partially removed circle.

In a further embodiment, an axial gap dynamo-electric machine comprises a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth. The partially removed circle has a midpoint at a predetermined point in relation to a center axis of the bearing and opposes the magnet at a predetermined gap. A first plane including first and second points on magnet-opposed surfaces of first and second teeth of the plurality of teeth situated on both sides of the removed portion and a third point on a magnet-opposed surface of a third tooth positioned on an opposite side of the center axis of the bearing relative to a center point between the first and the second teeth and being closest to a second plane including the center point and the center axis is inclined about a direction perpendicular to the center axis of the bearing.

Preferably the opposed surface of the stator yoke is inclined to position the magnet-opposed surfaces of the first and the second teeth closer towards the magnet than the magnet-opposed surface of the third tooth.

Further preferably, heights of the plurality of teeth are formed so as to increase from the tooth furthest away from the removed position, in particular the third tooth towards the teeth closest to the removed portion, in particular towards the first and second teeth step-by-step.

Still further preferably, the midpoint of the partially removed circle is positioned on the center axis of the revolving shaft.

In another preferred embodiment, an axial gap dynamo-electric machine comprises a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth. The partially removed circle has a midpoint at a predetermined point in relation to a center axis of the bearing and opposes the magnet at a predetermined gap. Circumferential pitches among the plurality of teeth are set to differ from each other, in particular, so that an attractive force of the magnet is set to increase towards the removed portion.

Preferably, circumferential pitches among the plurality of teeth are set to increase from a third tooth being positioned further away from the removed portion, in particular, on the opposite side of the center axis relative to the midpoint between a first and a second tooth being located on both sides of and closest to the removed portion, in particular, at a position closest to a second plane including the midpoint and the center axis toward the fist and the second teeth in sequence.

In a further preferred embodiment, an axial gap dynamo-electric machine comprises a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth. The partially removed circle has a midpoint at a predetermined point in relation to a center axis of the bearing and opposes the magnet at a predetermined gap. Areas of the magnet-opposed surfaces of the plurality of teeth are set to differ from each other, in particular, so that an attractive force of the magnet is set to increase towards the removed portion.

Preferably, areas of the magnet-opposed surfaces of the plurality of teeth are set to increase from a third tooth positioned further away from the removed portion, in particular, on the opposite side of the center axis of the bearing relative to a midpoint between first and second teeth positioned closest to and on both sides of the removed portion, in particular, at a position closest to a second plane including the midpoint and the center axis toward the fist and the second teeth in sequence.

Further preferably, widths of the magnet-opposed surfaces of the plurality of teeth are set to increase from the third tooth to the first and the second teeth in sequence.

In a further preferred embodiment, an axial gap dynamo-electric machine comprises a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth. The partially removed circle has a midpoint at a predetermined point in relation to a center axis of the bearing and opposes the magnet at a predetermined gap. A center of the revolving shaft is deviated from the midpoint of the partly removed circle in a direction away from the removed portion.

Preferably, the magnet is formed into a ring shape coaxial with the center of the revolving shaft of the rotor.

Further preferably, a first length along a radial direction between respective surfaces on inner peripheral sides of the respective teeth and the center of the partly removed circle and a length of the inner radius of the ring-shaped magnet are substantially aligned, and a second length along the radial direction between outer peripheral surfaces of the respective teeth and the center of the partly removed circle and a length of the outer radius of the ring-shaped magnet are substantially aligned.

It is preferred that a length of the inner radius of the ring-shaped magnet is shorter than a first length along a radial direction between inner peripheral surfaces of the respective teeth and the center of the partly removed circle, and/or a length of an outer radius of the ring-shaped magnet is longer than a second length along the radial direction between outer peripheral surfaces of the respective teeth and the center of the partly removed circle.

It is further preferred that a first length along a radial direction between respective surfaces on inner peripheral sides of the respective teeth and the center of the partly removed circle and a length of an inner radius of the ring-shaped magnet are substantially aligned, and a length of the outer radius of the ring-shaped magnet is longer than a second length along the radial direction between the outer peripheral surfaces of the respective teeth and the center of the partly removed circle.

In another preferred embodiment, an axial gap dynamo-electric machine comprises a rotor having a revolving shaft supported by a bearing and a magnet for generating a magnetic field, a stator yoke disposed so as to oppose the rotor, and a plurality of teeth being disposed on the magnet-opposed surface of the stator yoke substantially in the shape of a partly removed circle, wherein a removed portion is free of teeth. The partially removed circle has a midpoint at a predetermined point in relation to a center axis of the bearing and opposes the magnet at a predetermined gap. A connecting yoke for connecting or bridging the removed portion of the stator yoke is provided.

In a further preferred embodiment, the plurality of teeth are disposed on the opposed surface of the stator yoke, and are constructed as a stator by the stator yoke and the plurality of teeth, wherein the stator further comprises a plurality of flanges for mounting the stator, in particular, wherein the plurality of flanges include two flanges positioned on an upper side of the removed portion in a state in which the stator is mounted, in particular, wherein the two flanges positioned on the upper side are arranged so as to be substantially symmetrical with respect to a line passing an uppermost point and a lowermost point of the stator in the mounted state.

Preferably, a controller and/or an inverter are provided to be at least partially positioned in the removed portion.

Further preferably, a planet gear speed reducer is connected to the rotor, in particular, in a manner to at least partially overlap with the gap between rotor and stator in axial direction.

In another embodiment, an apparatus, in particular, a driving machine, such as a motorcycle, comprises an axial gap dynamo-electric machine as described in the invention.

## Claims

1. Axial gap dynamo-electric machine, comprising:
a rotor (40) having a revolving shaft (42e) supported by a bearing (38a, 38b) and a magnet (45, 45A, 45B) for generating a magnetic field;
a stator yoke (60) disposed so as to oppose the rotor (40); and
a plurality of teeth (61) being disposed on the magnet-opposed surface of the stator yoke (60) substantially in the shape of a partly removed circle, wherein a removed portion (TW) is free of teeth (61), the partially removed circle having a midpoint (BC,OA1) at a predetermined point in relation to a center axis (BO) of the bearing (38a, 38b) and opposing the magnet (45, 45A, 45B) at a predetermined gap, **characterized in that** circumferential pitches (θ₁, θ₂, θ₃, θ₄, θ₅, θ₆, θ₇) among the plurality of teeth (61) are set to differ from each other, in particular, so that an attractive force of the magnet (45) is set to increase towards the removed portion (TW).

2. Axial gap dynamo-electric machine according to claim 1, **characterized in that** circumferential pitches (θ₁, θ₂, θ₃, θ₄, θ₅, θ₆, θ₇) among the plurality of teeth (61) are set to increase from a third tooth (61ₐ₃) being positioned further away from the removed portion (TW), in particular, on the opposite side of the center axis (BO) relative to the midpoint (CP) between a first and a second tooth (61ₐ₁, 61ₐ₂) being located on both sides of and closest to the removed portion (TW), in particular, at a position closest to a second plane (H) including the midpoint (CP) and the center axis (BO) toward the first and the second teeth (61ₐ₁, 61ₐ₂) in sequence.

3. Axial gap dynamo-electric machine according to claim 1 or 2, **characterized in that** a connecting yoke (75, 85) for connecting or bridging the removed portion (TW) of the stator yoke (60) is provided.

4. Axial gap dynamo-electric machine according to at least one of the claims 1 to 3, **characterized in that** the plurality of teeth (61) are disposed on the opposed surface of the stator yoke, and are constructed as a stator (41) by the stator yoke (60) and the plurality of teeth (61), wherein the stator (41) further comprises a plurality of flanges (64) for mounting the stator (41),
in particular, wherein the plurality of flanges (41) include two flanges (64ₐ₁, 64ₐ₂) positioned on an upper side of the removed portion (TW) in a state in which the stator (41) is mounted,
in particular, wherein the two flanges (64ₐ₁, 64ₐ₂) positioned on the upper side are arranged so as to be substantially symmetrical with respect to a line (L) passing an uppermost point (M1) and a lowermost point (M2) of the stator (41) in the mounted state.

5. Axial gap dynamo-electric machine according to at least one of the claims 1 to 4, **characterized in that** a controller (37) and/or an inverter (70) are provided to be at least partially positioned in the removed portion (TW).

6. Axial gap dynamo-electric machine according to at least one of the claims 1 to 5, **characterized in that** a planet gear speed reducer (36) is connected to the rotor (40), in particular, in a manner to at least partially overlap with the gap between rotor (40) and stator (41) in axial direction.

7. Apparatus, in particular, a driving machine, such as a motorcycle, **characterized by** comprising an axial gap dynamo-electric machine according to at least one of the claims 1 to 6.
